# EUROPEAN PATENT APPLICATION

(11) **EP 1 845 293 A2**
(43) Date of publication of application: **17.10.2007**
(21) Application number: 07007468.7
(22) Date of filing: 12.04.2007
(51) Int. Cl.: F16K 15/03, E03F 7/04

(54) **one-way valve**

(30) Priority: 13.04.2006 US 404034
(71) Applicant: Thetford Corporation, Ann Arbor MI 48106 (US)
(72) Inventor: Durrani, Sheryar, West Bloomfield, Michigan 48322 (US)
(74) Representative: Gleiss, Alf-Olav

(57) **Abstract**

A valve assembly (10) may include a valve body (16) having a main body portion (20) and a mounting portion (22). The main body portion (20) may include a perimeter, a first side (26) and a second side (28). The first side (26) may define a sealing portion extending proximate to and substantially around the perimeter. The sealing portion may mate with a valve seat (40). The second side (28) of the main body portion may be convexly curved. The valve body (16) may disposed within a flow path define by one or more conduits (12,14). The flow path may have at least a portion with a generally circular cross section having a radius. The first side (26) may mate with a valve seat (40). The main body portion (20) may be moveable within the flow path relative to the valve seat (40) between an open position and a closed position.

## Description

### INTRODUCTION

The present invention relates to one way valves. More particularly, the present invention relates to an in-line, one way valve assembly.

Various types of one way valves are known to allow flow along a path in a first direction and prevent flow in an opposite, second direction. While known valve assemblies have proven acceptable for their intended applications, there remains a need for continuous improvement in the pertinent art. In this regard, it is desired to provide a one way valve which seals effectively against back flow from a first side, opens to positive pressures on the second side, and occupies a limited area in the flow path when open.

### SUMMARY

According to one aspect, the present teachings provide a valve body including a main body portion and a mounting portion. The main body portion may include a perimeter, a first side and a second side. The first side may define a sealing portion extending proximate to and substantially around the perimeter. The sealing portion may mate with a valve seat. The second side of the main body portion may be convexly curved.
According to another aspect, the present teachings provide a valve assembly including at least one conduit defining a flow path and a valve body disposed within the flow path. The flow path may have at least a portion with a generally circular cross section having a radius. The valve body may include a main body portion having a first side and an opposing second side. The first side may mate with a valve seat. The second side may be convexly curved. The main body portion may be moveable within the flow path relative to the valve seat between an open position and a closed position.

Further areas of applicability of the present disclosure will become apparent from the detailed description provided hereinafter. It should be understood that the detailed description and specific examples, while indicating the preferred embodiment of the invention, are intended for purposes of illustration only and are not intended to limit the scope of the present disclosure.

### BRIEF DESCRIPTION OF THE DRAWINGS

The present invention will become more fully understood from the detailed description and the accompanying drawings, wherein:

Figure 1 is a side view of a one way valve assembly in accordance with the present disclosure.

Figure 2 is an end view of the one way valve assembly of the present disclosure in the direction of Arrow A in Figure 1, illustrated with the second conduit removed for purposes of illustration and a valve body of the valve assembly articulated to a closed position.

Figure 3 is a top view of the valve assembly of Figure 2 taken in the direction of Arrow B.

Figure 4 is a cross-sectional view taken along the line 4-4 of Figure 1.

Figure 5 is a side view of the valve assembly of Figure 2 taken in the direction of Arrow C, the first conduit shown partially cut-away for purposes of illustration.

Figure 6 is a perspective view of the valve body of the valve assembly of the present disclosure, the valve body removed from the remainder of the valve assembly for purposes of illustration.

Figure 7 is a front view of the valve body of Figure 6.

Figure 8 is a side view of the valve body of Figure 6.

Figure 9 is a top view of the valve body of Figure 6.

### DESCRIPTION OF VARIOUS ASPECTS

The following description of the present teachings will be considered to be merely exemplary in nature and is in no way intended to limit the invention, its application, or uses.

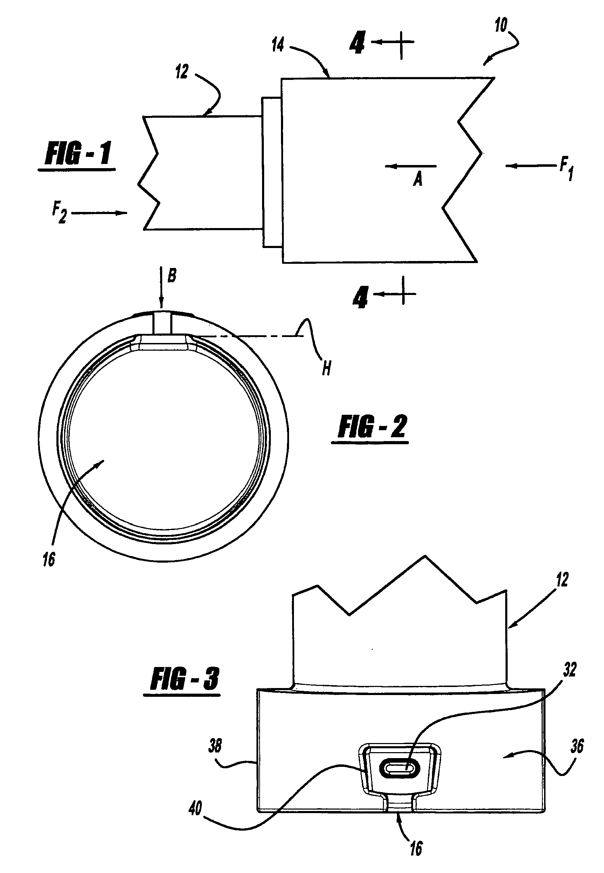

With initial reference to Figure 1 of the drawings, a valve assembly constructed according to the teachings of the present disclosure is illustrated and generally identified at reference character 10. In one particular application, the valve assembly 10 may be used within a waste transfer arrangement such as a macerator toilet or the like for the transfer of waste to a holding tank or sewer. One such arrangement is described an application filed contemporaneously herewith entitled "Macerator Toilet", which has been assigned U.S. Serial No. 60/791,953. U.S. Serial No. 60/791,953 is incorporated by reference as if fully set forth herein.

After a reading of the remainder of this description, however, those skilled in the art will readily appreciate that the teachings of the present disclosure are not limited to this exemplary application. Rather, the various of the teachings of the present disclosure have applicability to other fluid transfer arrangements. As used herein, the term fluid will be understood to include liquid, gas and/or slurry type material, such as but not limited to sewage transferred from a toilet to a holding tank or sewer.

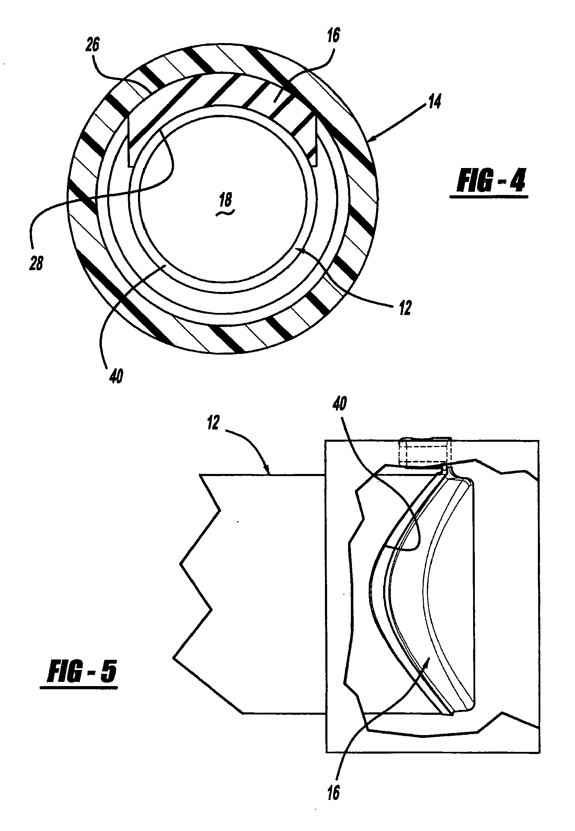

With continued reference to Figure 1 and additional reference to Figures 2 through 9 of the drawings, the valve assembly of the present disclosure will be further described. The valve assembly 10 may include one or more conduits 12 and 14 and a valve body 16. The one or more conduits 12 and 14 may define a flow path 18 (see Figure 4). The valve body 16 may be disposed in the flow path 18.

In certain applications, the first conduit 12 may be part of rigid structure. For example, the first conduit 12 may be a generally cylindrical extension of a housing that defines an outlet as shown in the commonly assigned application incorporated by reference above. The second conduit 14 may be coupled or otherwise interconnected to the first conduit 12 to form a fluid tight relationship therebetween. The second conduit 14 may be constructed of a flexible material such as a flexible rubber hose.

The valve body 16 may be mounted in the flow path 18 for movement between a closed orientation and an open orientation. In this regard, and as will be discussed further below, the valve body 16 may include a main body portion 20 and a mounting portion 22. The main body portion 20 may be moveable relative to the mounting portion 22 between a closed position and an open position.

The closed position of the main body portion 20 is shown, for example, in Figures 2, 3 and 5. The open position of the main body portion 20 is shown, for example, in the cross-sectional view of Figure 4. In the closed position, the valve body portion 20 effectively seals against the backflow of fluid in a first direction F₁ (see Figure 1). In the open position, the valve body portion 20 allows for the flow of fluid in an opposite, second direction F₂ (again, see Figure 1).

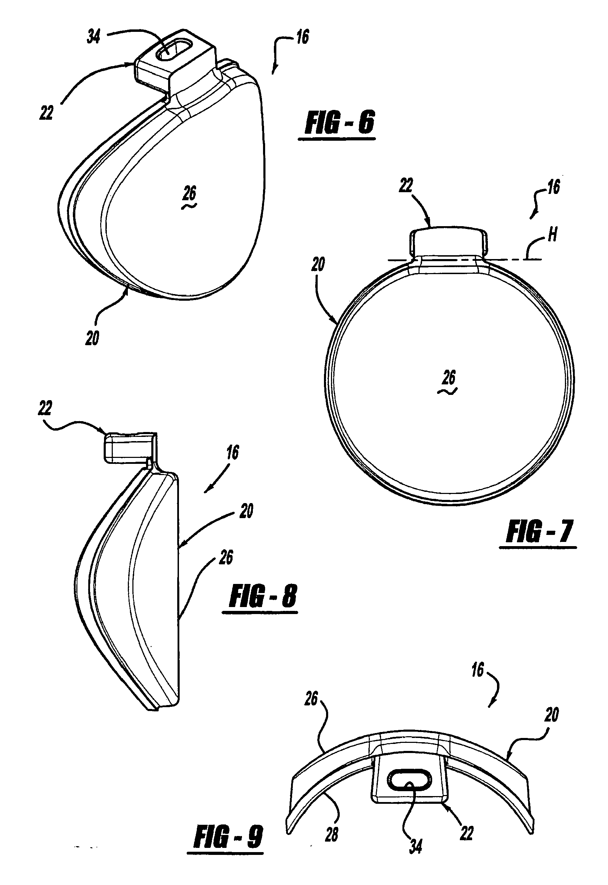

With particular reference to Figures 6-9, the valve body 16 is shown removed from the remainder of the valve assembly 10 for purposes of illustration. In plan view, the main body portion 20 may be circular (see Figures 2 and 7). The mounting portion 22 may radially extend from the main body portion 20. A living hinge may be defined through the interconnection of the main body portion 20 and the mounting portion 22. The living hinge may include a hinge axis H (see Figures 2 and 7) about which the main body portion 20 articulates between the closed position and the open position.

The main body portion 20 of the valve body 16 may include a first side 26 and a second side 28. The first side 26 may be concavely curved in a direction extending substantially parallel to the hinge axis H. The first side 26 may be generally linear in a direction substantially perpendicular to the hinge axis H.

The main body portion 20 may be disk shaped in that the second side 28 is oriented generally parallel to the first side 26. As such, the second side 28 may be convexly curved in the direction extending parallel to the hinge axis H. Additionally, the second side 28 may be generally linear in a direction perpendicular to the hinge axis H.

The first conduit 12 may be defined to include a radially extending tab 32 (see Figure 32, for example). The tab 32 may be received within an aperture 34 defined by the mounting portion 22 of the valve body 16. The first conduit 12 may be associated with a flange 36. The flange 36 may include a cylindrical portion 38 concentrically oriented relative to the first conduit 12. The cylindrical portion 38 may define an opening 40 to accommodate the tab 32 and to allow attachment of the valve body 16. Adjacent a forward edge of the cylindrical portion 38 of the flange 36, the opening may narrow to a dimension less than the width of the mounting portion 22. The cylindrical portion 38 may additionally serve to retain the valve body 16 relative to the first conduit 12.

As shown perhaps most clearly in the cross-sectional view of Figure 4, the second conduit 14 may be mounted to the outer diameter of the cylindrical portion 38. The second conduit 14 may be retained with friction. Alternatively or additionally, the second conduit 14 may be secured to the cylindrical portion 38 with a hose clamp (not shown) or any other structure well known in the art.

An end of the first conduit 12 may define the valve seat 40. The valve seat 40 may matingly engage a sealing portion of the main body portion 20 of the valve body 16. The sealing portion of the main body portion 20 is on the first side 26 and extends proximate to and substantially around a perimeter of the main body portion. The valve seat 40 may include segments which longitudinally extend in the direction F₁ relative to the hinge axis H. These segments are perhaps shown most clearly in Figure 5. Otherwise described, the valve seat 40 may include concavely curved portions extending through approximately 90 degrees and centered at the top and the bottom of the conduit 12 as viewed in Figure 4, for example. Additionally, the valve seat 40 may include convexly curved portions extending through approximately 90 degrees and centered at the lateral sides of the conduit 12, again as viewed in Figure 4. As such, the valve seat 40 may matingly receive the main body portion 20. In this regard, it will be understood that the sealing portion of the second side 28 of the main body portion 20 of the valve body similarly has a perimeter with corresponding convexly and concavely curved surfaces.

The convex curvature of the second side 28 of the main body portion 20 of the valve body 16 may have a radius of curvature substantially identical to the radius of the inner diameter of the second conduit 14. In this manner, the second side 28 of the main body portion 20 may matingly abut the inner diameter of the second conduit 14 when the main body portion 20 is in the open position. This mating relationship is shown, for example, in the cross-sectional view of Figure 4. Through this mating relationship and the minimal thickness of the main body portion 20, the flow path is minimally restricted by virtue of the inline nature of the valve body 16.

In one particular application, the main body portion 20 of the valve body 16 may have a thickness of approximately 5.0 mm. The radius of curvature of the convex of the second side 28 may be approximately 50 mm (matching the inner diameter of the tube in which it resides) and the inner radius of the second conduit is similarly approximately 45 mm. It will be understood that these dimensions are merely examples and that other dimensions may be utilized for particular applications.

The valve body 16, including the main body portion 20 and the mounting portion 22 may be unitarily constructed of a relatively flexible material. In one application, the valve body 16 may be constructed of rubber. Alternatively, the valve body 16 may be constructed of any material having suitable strength and durability characteristics. It will also be appreciated that the main body portion 20 and the mounting portion 22 may be constructed independently and/or of different materials.

In use, the main body portion 20 of the valve body 16 is normally articulated to the closed position. As fluid flows through the flow path 18 in the direction of Arrow F₂, the main body portion 20 may be articulated to the open position through rotation about the hinge axis H. The living hinge of the valve body 16 allows articulation from a closed position to an open position with the application of minimal pressure as applied by the fluid.

In the open position, the valve body 16 may matingly abut an inner surface of the second conduit 14. Insomuch as the first conduit 12 has a diameter less than the diameter of the second conduit 14, the valve body 16 remains in the flow path but is out of a direct path for the fluid as it exits the first conduit 12 (see Figure 4, for example). After the fluid has passed, the resilient nature of the valve body 16 returns the main body portion 20 to the closed position in mating relationship with the valve seat 40.

The above description of various aspects is merely exemplary in nature and, thus, variations that do not depart from the gist of the invention are intended to be within the scope of the invention. Such variations are not to be regarded as a departure from the spirit and scope of the invention. Furthermore, the present invention has been described with reference to particular embodiments having many common and some distinct features. One skilled in the art will recognize that these features may be used singularly or in any combination based on the requirements and specifications of a given application or design.

## Claims

1. A valve assembly comprising:
a valve body including a main body portion and a mounting portion, the main body portion with a perimeter, the main body portion having a first side and a second side, the first side defining a sealing portion extending proximate to and substantially around the perimeter, the sealing portion for mating with a valve seat, the second side of the main body portion being convexly curved.

2. The valve assembly of claim 1, wherein the first side of the main body portion is concavely curved.

3. The valve assembly of claim 1, wherein the mounting portion is flexibly coupled to the main body portion for articulation between an open position and a closed position.

4. The valve assembly of claim 2, wherein the mounting portion is coupled to the main body portion through a living hinge.

5. The valve assembly of claim 1 in combination with a first conduit, an end of the conduit defining the valve seat.

6. The valve assembly of claim 5, wherein the conduit has a circular cross section.

7. The valve assembly of claim 1, further comprising a second conduit, the second conduit having an inner radius, the second conduit interconnected to the first conduit in a fluid tight relationship, the valve body disposed in a flow path cooperatively defined by the first and second conduits.

8. The valve assembly of claim 7, wherein the second side of the valve body has a radius of curvature substantially equal to the inner radius of the second conduit.

9. The valve assembly of claim 8, wherein the valve body is moveable between a closed position and an open position such that in the closed position the valve body seats against the valve seat and in the open position the second side of the valve body is matingly adjacent an inner surface of the second conduit.

10. The valve assembly of Claim 1, wherein the main body portion of the valve body rotates relative to the mounting portion through approximately 90 degrees from a closed position to an open position.

11. A valve assembly comprising:
at least one conduit defining a flow path, the flow path having at least a portion with a generally circular cross section having a radius; and
a valve body disposed within the flow path, the valve body including a main body portion having a first side and an opposing second side, the first side for mating with a valve seat, the second side being convexly curved, the main body portion moveable within the flow path relative to a valve seat between an open position and a closed position.

12. The valve assembly of claim 11, wherein the second side of the valve body has a radius of curvature substantially equal to the radius of the portion of the flow path with the generally circular cross section.

13. The valve assembly of claim 11, wherein the first side of the main body portion is concavely curved.

14. The valve assembly of claim 11, wherein the valve body further includes a mounting portion, the mounting portion flexibly coupled to the main body portion for articulation between the open position and the closed position.

15. The valve assembly of claim 14, wherein the mounting portion is coupled to the main body portion through a living hinge.

16. The valve assembly of claim 11, wherein the at least one conduit defining the flow path includes a first conduit and a second conduit, an end of the first conduit defining the valve seat.

17. The valve assembly of claim 11, wherein the main body portion of the valve body is matingly adjacent an outer boundary of the flow path when in the open position.

18. The valve assembly of claim 14, wherein the main body portion of the valve body rotates relative to the mounting portion through approximately 90 degrees from the closed position to the open position

19. The valve assembly of claim 11, wherein the main body portion of the valve body has a perimeter and the first side defines a sealing portion extending proximate to and substantially around the perimeter, the sealing portion for mating with a valve seat.

20. The valve assembly of claim 11, wherein a tab radially extending from the first conduit, the tab engaging and retaining the valve body.
